# DEMANDE DE BREVET EUROPEEN

(11) **EP 1 199 625 A1**
(43) Date de publication de la demande: **24.04.2002**
(21) Numéro de dépôt: 01410131.5
(22) Date de dépôt: 19.10.2001
(51) Int. Cl.: G06F 1/00, G06F 3/02, G07F 7/08

(54) **Procédé et terminal sécurisé d'authentification de carte à puce**

(30) Priorité: 20.10.2000 FR 0013464
(71) Demandeur: Ascom Monétel SA, 07500 Guilherand-Granges (FR)
(72) Inventeur: Carabelli, André, 07130 Saint Peray (FR); Eck, Alain, 26120 Montmeyran (FR)
(74) Mandataire: de Beaumont, Michel

(57) **Abrégé**

L'invention concerne un terminal de lecture de cartes à puce et un procédé d'échange d'informations entre un microprocesseur principal (2') du terminal et une carte (6) à puce sous la forme d'un signal bidirectionnel (I/O CAM) entre le microprocesseur principal et un dispositif (5) de réception de la carte, consistant à intercaler, entre le microprocesseur principal et le dispositif de réception de la carte, des moyens (40) de reproduction dudit signal, à rendre lesdits moyens transparents dans le sens microprocesseur vers carte, et à interdire la reproduction, à destination du microprocesseur principal, d'un code d'authentification de la carte à puce par lesdits moyens de reproduction, ledit code provenant d'un élément d'introduction (4).

## Description

La présente invention concerne le domaine des éléments portables contenant une puce du type des cartes à puce et des terminaux de lecture de ces éléments.

L'invention sera décrite par la suite en relation avec les cartes à puce. Toutefois, elle concerne, plus généralement tous les systèmes à des éléments portables comprenant une puce devant être introduits dans un lecteur ou analogue.

L'invention concerne plus particulièrement les cartes à puce ou analogues qui sont utilisées pour valider des transactions après vérification de la cohérence d'un code (PIN code) propre à la puce et saisi par un utilisateur. Le plus souvent, la carte est introduite dans un terminal (par exemple, de paiement) et l'utilisateur tape physiquement le code sur un clavier du terminal. Ce code est envoyé à la puce de la carte sur une liaison série bidirectionnelle. En réponse, la puce autorise la transaction si le code est correct. La puce ne délivre jamais elle même son code.

Le code PIN est un élément essentiel de la sécurité des interlocuteurs dans les transactions basées sur des cartes à puce (par exemple, l'utilisateur et la banque). Il est par conséquent important de veiller à ce que ce code ne puisse pas être piraté lors de son transfert entre l'élément d'introduction du code et la carte à puce. En effet, ce transfert s'effectue le plus souvent "en clair", c'est-à-dire de façon non cryptée. Une observation des signaux électriques peut alors permettre le piratage du code. Parmi les moyens d'inviolabilité utilisés, certains éléments du terminal sont regroupés dans une zone dite "à accès protégé" ou "TAMPER". Les éléments de cette zone sont protégés contre une observation des signaux électriques, la zone étant elle-même protégée contre une tentative d'effraction mécanique ou électrique.

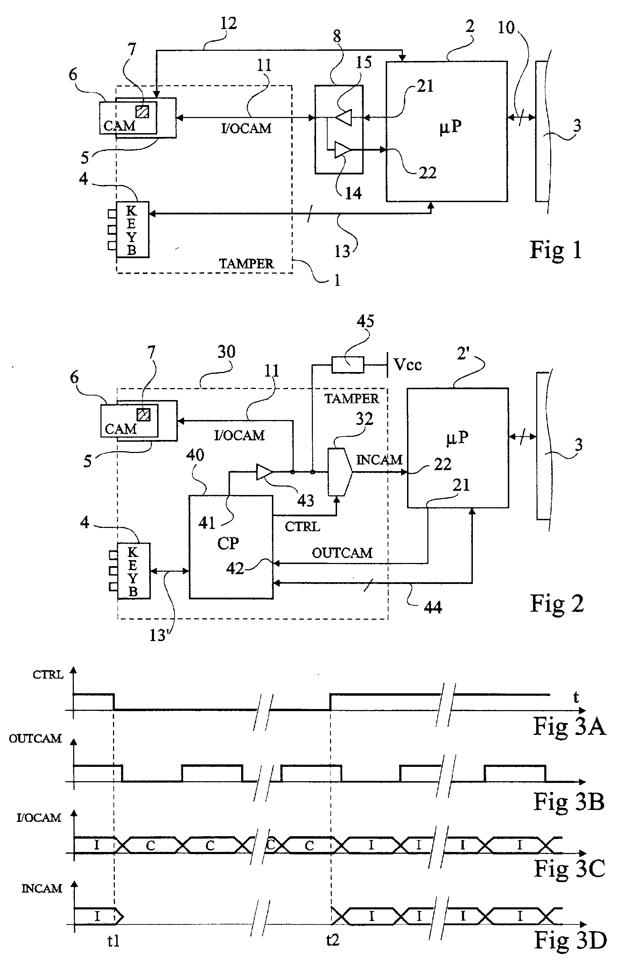

La figure 1 représente, de façon partielle et très schématique, un exemple classique d'une zone protégée 1 (TAMPER) d'un terminal de cartes à puce. En figure 1, on s'est contenté de représenter les éléments du terminal qui ont un lien avec l'invention. Il s'agit essentiellement d'un microprocesseur 2 (µP) qui communique avec la zone protégée 1 et avec divers périphériques (mémoires, modem, etc.) contenus dans le terminal, mais externes à la zone 1. Ces périphériques et le reste du terminal ont été représentés par un bloc partiel désigné par la référence 3 communiquant, par une liaison bidirectionnelle multifilaire 10 (symbolisant les bus et signaux du microprocesseur) avec le microprocesseur 2.

Dans l'exemple de la figure 1, la zone 1 comprend un clavier 4 (KEYB) de saisie, un dispositif 5 de réception d'une carte 6 à puce 7 (CAM), et une liaison série bidirectionnelle 11 (I/O CAM) entre le dispositif 5 et une interface électrique 8 d'entrée-sortie du microprocesseur 2. Le dispositif 5 contient, notamment, les moyens mécaniques de connexion avec les contacts de la puce. La liaison 11 relie directement un des contacts de la puce 7 à l'interface 8. En pratique, l'interface 8 comprend des circuits (drivers) 14 et 15 d'adaptation d'impédance et de niveau. Elle est reliée à deux bornes d'entrée 21 et de sortie 22 dédiées du microprocesseur 2. Outre la liaison 11, la puce reçoit différents signaux d'alimentation et de commande symbolisés, en figure 1, par une liaison 12. Le clavier 4 est destiné, entre autres, à la saisie du code PIN d'une carte 6 introduite dans le terminal. Le clavier 4 communique avec le microprocesseur 2 par une liaison 13.

Tous les échanges d'information à l'intérieur de la zone protégée 1 sont commandés et synchronisés par le microprocesseur 2.

Une particularité de la transmission d'informations entre une carte à puce et un terminal est que toutes ces informations (données) transitent par la liaison bidirectionnelle unifilaire 11 (liaison série). Ce fonctionnement est imposé par des normes.

Pour une sécurité optimale, le code PIN ne devrait pas quitter la zone protégée sauf s'il est crypté. Or, la transmission du code à la carte pour authentification requiert que le code transite par le microprocesseur pour être envoyé sur la liaison 11. Cela constitue un point faible des terminaux classiques.

Une première solution connue pour résoudre ce problème est de modifier les cartes à puce pour qu'elles puissent interpréter un code crypté. Dans ce cas, la zone protégée contient un processeur supplémentaire dédié au cryptage, appelé cryptoprocesseur. Le cryptoprocesseur reçoit le code en clair du clavier et le transmet, de façon cryptée, au microprocesseur externe à la zone protégée. Ce dernier transmet alors le code crypté à la liaison 11. Une telle solution n'est cependant pas compatible avec la plupart des cartes à puces actuelles qui doivent recevoir le code PIN en clair pour authentification.

Une deuxième solution connue est de transférer le microprocesseur 2 dans la zone protégée. Les échanges entre celui-ci, le clavier 4 et la carte à puce 6 sont alors sécurisés. Toutefois, cela requiert d'embarquer dans la zone protégée, non seulement les programmes de gestion du code secret, mais également tous les programmes de gestion des transferts d'informations avec la carte (par exemple, les protocoles de communication avec la carte, les programmes de lecture des données d'identification de la carte, numéro de série, titulaire, etc.). En effet, dans le cas contraire, il serait possible, pour un pirate, d'intercepter les échanges entre le microprocesseur et ses périphériques pour pirater la zone protégée. Un inconvénient de cette deuxième solution est qu'elle accroît la taille de la zone protégée. Mais surtout, elle rend le terminal non évolutif sauf à reporter le problème de la sécurité aux téléchargements des mises à jour des programmes.

La présente invention vise à pallier les inconvénients liés à la transmission, dans un terminal, d'un code secret non crypté à une carte à puce.

L'invention vise, plus particulièrement à permettre la transmission du code "en clair" sur la liaison bidirectionnelle série d'entrée-sortie d'une carte à puce, sans le rendre accessible hors de la zone protégée.

L'invention vise également à préserver la possibilité de mettre à jour les programmes de gestion de la carte à puce à l'extérieur de la zone protégée.

L'invention vise en outre à proposer une solution qui puisse être mise en oeuvre avec un minimum de modifications dans les terminaux classiques et qui reste compatible avec une gestion classique des cartes à puces introduites et des parcs de terminaux les acceptant.

Pour atteindre ces objets, la présente invention prévoit un procédé d'échange d'informations entre un microprocesseur principal d'un terminal de lecture d'éléments portables de type cartes à puce et un tel élément, sous la forme d'un signal bidirectionnel entre le microprocesseur principal et un dispositif de réception de l'élément portable, consistant :
à intercaler, entre le microprocesseur principal et le dispositif de réception de l'élément portable, des moyens de reproduction dudit signal ;
à rendre lesdits moyens transparents dans le sens microprocesseur vers élément portable ; et
à interdire la reproduction, à destination du microprocesseur principal, d'un code d'authentification de l'élément portable par lesdits moyens de reproduction, ledit code provenant d'un élément d'introduction.

Selon un mode de réalisation de la présente invention, lesdits moyens de reproduction, ledit dispositif de réception et ledit élément d'introduction du code font partie d'une zone protégée contre une observation des signaux électriques et contre une intrusion mécanique.

Selon un mode de réalisation de la présente invention, le cadencement des échanges est assuré par le microprocesseur principal.

Selon un mode de réalisation de la présente invention, les fonctions de gestion des échanges avec l'élément portable sont gérées par le microprocesseur principal à l'exception de la présentation du code d'authentification qui est assurée par un processeur auxiliaire.

Selon un mode de réalisation de la présente invention, lesdits moyens de reproduction sont constitués d'un processeur auxiliaire, ledit microprocesseur principal étant hors de la zone protégée.

Selon un mode de réalisation de la présente invention, lesdits moyens de reproduction sont constitués d'une zone à accès contrôlé du microprocesseur principal, embarqués dans la zone protégée.

L'invention prévoit également un terminal de lecture d'éléments portables de type cartes à puce comportant une zone protégée contre une observation des signaux électriques et contre une intrusion mécanique, ladite zone communiquant avec un microprocesseur principal et incluant au moins :
un dispositif de réception d'un élément portable à puce ;
un élément d'introduction d'un code d'authentification de l'élément portable ; et
un processeur auxiliaire de recopie d'un signal d'entrée-sortie de l'élément portable vers et depuis le microprocesseur principal, la recopie étant interdite par ledit processeur auxiliaire pendant la transmission du code d'authentification entre l'élément d'introduction et l'élément portable.

Selon un mode de réalisation de la présente invention, la zone protégée comporte un sélecteur dont une entrée est reliée à une liaison de transmission du signal d'entrée-sortie de l'élément portable, et dont une sortie délivre un signal à destination du microprocesseur principal, le sélecteur étant commandé par le processeur auxiliaire entre un état transparent où il laisse passer le signal d'entrée-sortie de la puce et un état confiné où il bloque la transmission.

Selon un mode de réalisation de la présente invention, le processeur auxiliaire comporte un port de sortie relié à la liaison de transmission du signal d'entrée-sortie de l'élément portable, sur lequel il recopie des informations provenant du microprocesseur principal ou de l'élément d'introduction.

Ces objets, caractéristiques et avantages, ainsi que d'autres de la présente invention seront exposés en détail dans la description suivante de modes de réalisation et de mise en oeuvre particuliers faite à titre non-limitatif en relation avec les figures jointes parmi lesquelles :
la figure 1 représente, de façon très schématique, un exemple classique de zone protégée d'un lecteur de cartes auquel s'applique la présente invention ;
la figure 2 représente, de façon très schématique, un mode de réalisation d'une zone protégée d'un lecteur de cartes selon la présente invention ; et
la figure 3A à 3D illustrent, sous forme de chronogrammes, un mode de mise en oeuvre du procédé d'échange d'informations selon la présente invention.

Les mêmes éléments ont été désignés par les mêmes références aux différentes figures. Pour des raisons de clarté, seuls les éléments et les étapes de procédé qui sont utiles à la compréhension de l'invention ont été représentés aux figures et/ou seront décrits par la suite. En particulier, les programmes de gestion d'une carte dans un terminal et les protocoles et synchronisations d'échange d'informations n'ont pas été détaillés et ne font pas l'objet de la présente invention. Il en est de même pour les techniques et algorithmes de cryptage et d'authentification contenus dans une carte à puce.

Une caractéristique de l'invention est de prévoir, dans la zone protégée d'un terminal de lecture de cartes à puce, un processeur auxiliaire pour recopier, sélectivement, le signal d'entrée-sortie d'une carte à puce à origine-destination d'un microprocesseur principal situé hors de la zone protégée. Un élément d'introduction d'un code d'authentification (code PIN) est contrôlé par le processeur auxiliaire et communique exclusivement avec celui-ci. Le signal d'entrée-sortie de la carte est généralement recopié, sans condition, dans le sens microprocesseur principal vers la carte et le processeur auxiliaire est alors transparent. Lors de la transmission du code d'authentification à la carte, le processeur auxiliaire utilise les synchronisations délivrées par le microprocesseur principal pour modifier le signal destiné à la carte et présenter lui-même le code PIN. En outre, le processeur auxiliaire bloque la transmission du signal d'entrée-sortie à destination du microprocesseur principal quand le code PIN est présent en clair sur ce signal.

La figure 2 représente un mode de réalisation d'une zone protégée 30 (TAMPER) d'un terminal de lecture de cartes à puce selon l'invention. Comme précédemment, la zone 30 contient un dispositif 5 d'introduction d'une carte 6 à puce 7 dont le rôle est de contacter électriquement la puce 6. La zone 30 contient également un élément d'introduction d'un code d'authentification (code PIN). Il s'agit, par exemple, d'un clavier 4 (KEYB). Le terminal comporte un microprocesseur principal 2' (µP) dont le rôle est, entre autres, de synchroniser les échanges d'informations à l'intérieur de la zone protégée 30. Le microprocesseur 2' sert également à l'exécution des programmes de gestion des échanges avec la carte.

Selon l'invention, le microprocesseur 2' est extérieur à la zone protégée 30 qui contient un processeur auxiliaire 40 (CP). Le processeur 40 est fonctionnellement intercalé sur une liaison d'entrée-sortie 11 d'informations entre le dispositif 5 et l'extérieur de la zone 30.

Par exemple, la liaison bidirectionnelle unifilaire 11 relie le dispositif 5 à une entrée d'un sélecteur 32 d'un mode de fonctionnement entre un mode transparent de la recopie du signal d'entrée-sortie de la puce (I/O CAM) et un mode de confinement du signal d'entrée-sortie à l'intérieur de la zone protégée 30. Une sortie du sélecteur 32 est reliée à une borne 22 d'entrée dédiée du microprocesseur 2' qui reçoit un signal INCAM. La borne 22 correspond à la borne d'entrée classique de raccordement de la liaison d'entrée-sortie. Le sélecteur 32 reçoit un signal de commande CTRL binaire du processeur 40. Dans ùn état de repos (par exemple, haut), le sélecteur (par exemple, une porte de type ET ou un multiplieur) laisse passer le signal I/O CAM vers le microprocesseur 2'. Dans un état actif (par exemple, bas), le sélecteur 32 empêche la transmission du signal I/O CAM vers le microprocesseur 2'.

Une borne 21 de sortie du microprocesseur 2', dédiée au signal d'entrée-sortie de la carte à puce, est reliée à une entrée 42 du processeur 40. L'entrée 42 est dédiée à la recopie du signal à destination du dispositif 5, donc de la carte à puce. Le processeur 40 délivre le signal recopié sur une borne de sortie 41 reliée, par l'intermédiaire d'un circuit (driver) 43 d'adaptation d'impédance et de niveau à la liaison 11. Le microprocesseur 2' et le processeur 40 communiquent en outre par un bus de commande 44. Le plus souvent, la liaison 11 est de type "à collecteur ouvert". Pour un tel fonctionnement, la liaison 11 est généralement reliée à un potentiel Vcc positif par une résistance 45 (pull up). Cette résistance est également présente classiquement mais n'a pas été représentée en figure 1.

Selon l'invention, l'élément d'introduction du code PIN (clavier 4) est relié au processeur 40 par une liaison 13' qui est désormais confinée dans la zone protégée. Le processeur 40 est capable de piloter la liaison 11. Il pilote cette liaison que ce soit pour recopier le signal OUTCAM ou pour transmettre le code PIN préalablement saisi au clavier où il joue alors le rôle classiquement attribué au microprocesseur 2'.

Dans le sens carte vers microprocesseur, la recopie du signal est permanente. Par contre, lorsque la liaison 11 doit être utilisée à destination du dispositif 5 (donc de la carte), le microprocesseur 40 autorise ou non la recopie du signal I/O CAM sur la liaison INCAM. Si les informations proviennent du microprocesseur 2', la recopie est autorisée. Les informations provenant du clavier et n'ayant pas à être confinées dans la zone protégée (par exemple, les touches de navigation) sont véhiculées par la liaison 44 entre le processeur auxiliaire et le microprocesseur principal.

Tous les échanges sont, comme dans un terminal classique, synchronisés par le microprocesseur 2' externe à la zone protégée. Cette synchronisation est apportée, par exemple, par la liaison OUTCAM comme on le verra par la suite.

Les figures 3A à 3D illustrent, sous forme de chronogrammes, un mode de mise en oeuvre du procédé de transfert d'informations selon l'invention. La figure 3A représente un exemple d'allure du signal CTRL. La figure 3B représente l'allure du signal OUTCAM. La figure 3C représente l'allure du signal I/O CAM. La figure 3D représente l'allure du signal INCAM.

On suppose qu'initialement, on est dans le mode de fonctionnement transparent. Le signal CTRL est à l'état haut et les informations I qui sont présentées sur le signal I/O CAM, qu'elles proviennent de la carte 6 ou du microprocesseur 2' (par le signal OUTCAM) sont véhiculées comme si le processeur 40 était absent. Pour des informations provenant du microprocesseur 2', le processeur 40 les recopie et les délivre sur sa borne 41. Pour des informations provenant de la carte, elles traversent le sélecteur 32 et sont alors présentes (fonctionnellement recopiées) sur le signal INCAM.

On suppose qu'à un instant t1, le signal CTRL bascule vers l'état bas pour passer dans le mode confiné. Cela fait suite à une demande du microprocesseur 2' que le code PIN soit présenté à la carte 6. Pour cela, le microprocesseur 2' positionne le signal OUTCAM à l'état de repos (état bas). Puis, il commande au processeur 40 (par le bus 44) de commuter vers un mode de présentation de code PIN. Le processeur 40 commute alors le signal CTRL (instant t1). Au lieu de transmettre le code sur le signal OUTCAM comme dans un terminal classique, le microprocesseur 2' envoie par la suite une suite d'états 0 et 1 destinés au cadencement du processeur 40.

Entre les instants t1 et t2 où la zone 30 est confinée, le processeur 40 transmet en clair les bits C appartenant au code PIN qu'il reçoit du clavier 4 à la carte 6. A la fin de la transmission (instant t2), le processeur 40 passe automatiquement en mode transparent où il active le sélecteur 32. Le microprocesseur 2' reçoit alors de nouveau le signal I/O CAM (recopié sous la forme du signal INCAM). Par conséquent, on reprend le fonctionnement d'un terminal classique. En particulier, la réponse de la carte constituée d'un message d'acceptation ou de refus est interprétée par le microprocesseur 2'.

Vu du processeur 40, celui-ci est par défaut dans le mode transparent où le sélecteur 32 autorise la recopie du signal I/O CAM sur la liaison INCAM. Selon un mode de mise en oeuvre préféré de l'invention, le processeur commute vers le mode confiné à chaque caractère (à chaque octet) du code PIN. Pour cela, lorsque le processeur 40 reçoit, du microprocesseur 2', l'ordre de passer en présentation du code PIN, il effectue les étapes suivantes.

Tout d'abord, il active une interruption d'un port temps réel auquel est relié le clavier 4. Cette étape est classique mais est habituellement mise en oeuvre par le microprocesseur 2'. Selon l'invention, il place sa sortie 41 dans un état de repos. Il arrête donc de recopier l'état du signal OUTCAM qui lui transmet, pendant ce temps, des bits de cadencement. A l'apparition d'une interruption provenant du clavier 4, le contenu de mémoires tampon associées aux bits transmis par le clavier est automatiquement recopié sur le port 41 du microprocesseur 40 à chaque front (par exemple, montant) du signal OUTCAM. Le processeur 40 repasse de lui-même en mode transparent après la transmission du bit de parité et du bit d'arrêt.

Un utilisateur pirate n'a aucun moyen de forcer le processeur 40 à recopier la liaison vers le microprocesseur 2' lors de la transmission du code. En effet, il lui faudrait ordonner au processeur 40 de commuter le sélecteur 32. Or, cela est, dans le processeur 40, incompatible avec la production d'une information confinée dans la zone protégée.

Un avantage de la présente invention est que la transmission du code secret en clair reste dans la zone protégée. De plus, le microprocesseur 2' et les programmes qui lui sont associés restent adaptables à l'extérieur de la zone protégée, sans risque pour l'intérieur.

Un autre avantage de l'invention est que le processeur embarqué dans la zone protégée n'a qu'une fonction limitée. Par conséquent, associé aux périphériques nécessaires à l'exécution de cette fonction (mémoires, etc.), il peut être ainsi constitué d'un boîtier unique (microcontrôleur).

Un autre avantage est que les fonctions qui sont confinées dans la zone protégée ne concernent, de préférence, que la gestion de la saisie du code PIN et de la reproduction du signal d'entrée-sortie de la puce. Les programmes correspondant ne sont que très rarement modifiés.

Enfin, bien que le confinement dans la zone protégée ait alors moins d'intérêt, l'invention est compatible avec l'utilisation de cartes à puce à code crypté. Dans ce cas, le processeur 40 intègre les fonctions de cryptage classiques

Bien entendu, la présente invention est susceptible de diverses variantes et modifications qui apparaîtront à l'homme de l'art. En particulier, la réalisation du processeur 40 et de ses périphériques qui doivent être embarqués dans la zone protégée est à la portée de l'homme du métier à partir des indications fonctionnelles données ci-dessus.

De plus, bien que l'on ait fait référence, dans la description qui précède, à des éléments matériels de sélection du mode de fonctionnement du système de recopie du signal d'entrée-sortie, il pourra s'agir d'éléments logiciels. Dans ce cas, le processeur auxiliaire correspond en fait à un mode de fonctionnement d'un microprocesseur unique embarqué dans la zone protégée. Ce mode possède des droits étendus sur les éléments de la zone protégée. Par exemple, seuls les programmes représentant le processeur auxiliaire qui seront confinés dans la zone protégée auront des droits de lecture, d'écriture et d'exécution sur les éléments de cette zone. L'adaptation du système de l'invention à un tel mode de réalisation "logiciel" est à la portée de l'homme du métier à partir des indications fonctionnelles données en relation avec le mode de réalisation "matériel". Un avantage du mode de réalisation "matériel" de la description qui précède est qu'il requiert moins de modifications des terminaux classiques.

Enfin, bien que l'invention ait été décrite en relation avec des cartes à puce, elle s'applique plus généralement à tout élément portable contenant une puce devant recevoir un code d'authentification et qui, introduit dans un terminal, échange des informations avec un microprocesseur sur une liaison série bidirectionnelle sur laquelle transite également le code d'authentification. Il pourra s'agir, par exemple, de clefs à puce.

## Revendications

1. Procédé d'échange d'informations entre un microprocesseur principal (2') d'un terminal de lecture d'éléments portables de type cartes à puce et un tel élément (6), sous la forme d'un signal bidirectionnel (I/O CAM) entre le microprocesseur principal (2') et un dispositif (5) de réception de l'élément portable, **caractérisé en ce qu'**il consiste :
à intercaler, entre le microprocesseur principal (2') et le dispositif (5) de réception de l'élément portable, des moyens (40) de reproduction dudit signal ;
à rendre lesdits moyens transparents dans le sens microprocesseur vers élément portable ; et
à interdire la reproduction, à destination du microprocesseur principal, d'un code d'authentification de l'élément portable à puce par lesdits moyens de reproduction, ledit code provenant d'un élément d'introduction (4), le cadencement des échanges étant assuré par le microprocesseur principal.

2. Procédé selon la revendication 1, **caractérisé en ce que** lesdits moyens de reproduction (40), ledit dispositif de réception (5) et ledit élément d'introduction du code (4) font partie d'une zone (30) protégée contre une observation des signaux électriques et contre une intrusion mécanique.

3. Procédé selon la revendication 2, **caractérisé en ce que** lesdits moyens de reproduction sont constitués d'un processeur auxiliaire (40), ledit microprocesseur principal (2') étant hors de la zone protégée (30).

4. Procédé selon la revendication 2, **caractérisé en ce que** lesdits moyens de reproduction sont constitués d'une zone à accès contrôlé du microprocesseur principal, embarqués dans la zone protégée (30).

5. Procédé selon l'une quelconque des revendications 1 à 4, **caractérisé en ce que** les fonctions de gestion des échanges avec l'élément portable sont gérées par le microprocesseur principal (2') à l'exception de la présentation du code d'authentification qui est assurée par un processeur auxiliaire (40).

6. Terminal de lecture d'éléments portables de type cartes à puce comportant une zone protégée (30) contre une observation des signaux électriques et contre une intrusion mécanique, ladite zone communiquant avec un microprocesseur principal (2') et incluant au moins :
un dispositif (5) de réception d'un élément portable (6) à puce (7) ;
un élément d'introduction (4) d'un code d'authentification de l'élément portable,
**caractérisé en ce qu'**il comporte en outre un processeur auxiliaire (40) de recopie d'un signal d'entrée-sortie (I/O CAM) de l'élément portable vers et depuis le microprocesseur principal (2'), la recopie étant interdite par ledit processeur auxiliaire pendant la transmission du code d'authentification entre l'élément d'introduction et l'élément portable, le cadencement des échanges étant assuré par le microprocesseur principal.

7. Terminal selon la revendication 6, **caractérisé en ce que** la zone protégée (30) comporte un sélecteur (32) dont une entrée est reliée à une liaison (11) de transmission du signal d'entrée-sortie (I/O CAM) de l'élément portable, et dont une sortie délivre un signal (INCAM) à destination du microprocesseur principal (2'), le sélecteur étant commandé par le processeur auxiliaire (40) entre un état transparent où il laisse passer le signal d'entrée-sortie de la puce et un état confiné où il bloque la transmission.

8. Terminal selon la revendication 7, **caractérisé en ce que** le processeur auxiliaire (40) comporte un port (41) de sortie relié à la liaison de transmission (11) du signal d'entrée-sortie (I/O CAM) de l'élément portable, sur lequel il recopie des informations provenant du microprocesseur principal (2') ou de l'élément d'introduction (4).

9. Terminal selon l'une quelconque des revendications 6 à 8, **caractérisé en ce qu'**il comporte des moyens pour mettre en oeuvre le procédé conforme à l'une quelconque des revendications 1 à 5.
